# EUROPEAN PATENT APPLICATION

(11) **EP 2 000 768 A1**
(43) Date of publication of application: **10.12.2008**
(21) Application number: 08157504.5
(22) Date of filing: 03.06.2008
(51) Int. Cl.: G01C 15/00, G01D 9/00, G01S 5/14

(54) **GPS enabled datalogging system for a non-destructive testing instrument**

(30) Priority: 04.06.2007 US 757564
(71) Applicant: Olympus NDT, Waltham, MA 02453 (US)
(72) Inventor: Drummy, Michael, NORTH READING, MA 01864 (US); Cancre, Fabrice, LEXINGTON, MA 02421 (US); Skidmore, John, TICKHILL, DONCASTER DN11 9QY (GB); Toomey, Jason, LINWOOD, MA 01525 (US)
(74) Representative: Franzolin, Luigi

(57) **Abstract**

A GPS enabled datalogging system for a non-destructive test / non-destructive inspection instrument. GPS obtained location data is used to geographically stamp inspection data entries, which provides for more efficient and accurate data collection, organization, and analysis. The GPS enabled datalogging system also provides a method for detecting when the instrument has entered a specific inspection zone and performing location specific tasks to aid the operator in that inspection.

## Description

### BACKGROUND OF THE INVENTION

The present invention relates to the acquisition and storage of inspection data, and more particularly, to methods of gathering, assembling, and analyzing that data which use an embedded global positioning satellite (GPS) device.

Any discussion of the related art throughout the specification should in no way be considered as an admission that such art is widely known or forms part of the common general knowledge in the field.

Organization and storage of measurement data, commonly referred to as datalogging, has long been a key component for inspection systems, most especially those systems which make use of portable non-destructive test (NDT) / non-destructive inspection (NDI) instruments. Since the advent of digital processing systems, storing large amounts of measurement data, either onboard a portable NDT/NDI instrument or transmitted to a central database, has become more and more feasible. Date, time, location, test conditions, and even brief notes from the test operator can be included with each measurement entry, all of which can be useful metrics in data analysis.

As inspection systems have become more complex, the challenge of storing and compiling a collection of measurement data has increased. A typical inspection may include hundreds of readings, each from a specific point on a structure under test. Each reading typically needs to be verified, compared against historical data, or analyzed. Prior art systems have included methods for storing, assembling, and processing this data--sophisticated computer based programs, for example--but all of these require that each data entry be marked with a unique ID or tag. Marking large numbers of data entries this way can be cumbersome, inefficient, and, in some case, impractical. Automatically indexing tables, for example, while fast and convenient, have significant limitations for providing descriptive ID tags. Conversely, manually setting up data entries at each inspection site can become overly time consuming and significantly hamper the inspection process.

In many inspection situations it is critical that measurements are made at specific points, with specific equipment or instrument settings, to preserve the validity of historical data, for example. This often necessitates the labor intensive creation of complex, predefined tables and a rigid inspection pattern to allow an operator to conduct an inspection in a timely manner.

In certain inspection situations--for example flaw detection on a large structure such as long section of railroad track or a bridge--it is desirable to mark or flag certain sections of the structure under test which nominally failed some inspection criteria and promptly notify the proper safety services. In prior art systems, this was done by either forcing an operator to halt the inspection process and manually mark the section or by incorporating a complex automated marking system--a paint gun, for example--into the inspection system. Methods of this type slow the inspection process and can prove inefficient and even unreliable for follow up inspections. Moreover, errors in this type of inspection process have potential to cause material and human harm.

Inspections of very large, remote structures--an oil pipeline, for example--often bear the weight of legal or regulatory concerns. Moreover, such inspections are often made at great cost and effort. For these reasons, a government agency or other interested party may require verification of data after an inspection. In these cases, an operator or the agency employing the operator is often required to provide some evidence that the structure has been inspected as reported. In prior art systems, this can become a time consuming process, often impeding the rate at which an inspection can be preformed.

Accordingly it would be advantageous to provide an intelligent datalogging system which dynamically tags measurement readings with geographic data and time stamp information through the use of an embedded GPS device. Further, it would be advantageous if this system could be used to automatically record the geographic location of failed sections of a structure and efficiently alert a follow up inspection system. It would also be advantageous if this system could make use of the GPS device to alert an operator with location specific instructions. It would further be advantageous if this new system could accurately and reliably verify to a third party the location and time an inspection reading was performed, including if desirable dynamically, i.e., in real time.

### SUMMARY OF THE DISCLOSURE

It is the object of the present disclosure to overcome the problems associated with prior art. This is attained by integrating an embedded GPS receiver into the datalogging system of a portable non-destructive test (NDT) / non-destructive inspection (NDI) instrument. It should be noted that throughout this disclosure, the terms *GPS data* and *GPS coordinates* refer to all or a subset of the following metrics: elevation, latitude and longitude information, and time. The embedded GPS receiver continuously reports the elevation and geographic coordinates of the inspection instrument and the exact time an inspection was performed to the system processor, or CPU, providing for the following advantages:
1. Inspection readings are dynamically stamped with the GPS coordinates of the inspection sensor, uniquely tagging and identifying each reading. A data analysis system resolves these geographic stamps to identify the structure under test for each reading and aid in data analysis and storage.
2. The inspection instrument dynamically alerts and provides to the operator with specific instructions, warnings, or area specific inspection history upon entering a new, predefined inspection zone or leaving the same.
3. For inspections of large structures--railroad lines or bridges, for example--potential problem areas can be dynamically logged with precise GPS data and alerts instantly sent via a wireless network, for further assessment, for example.
4. The GPS data logged with each inspection reading is stored in a read only field, allowing the data to be reliably and accurately verified at the conclusion of an inspection process.

Accordingly it is the object of the present disclosure to provide a datalogging system for a portable NDT/NDI instrument which dynamically logs the geographic coordinates and time of each inspection reading.

It is also an object of the present disclosure to provide a datalogging system for a portable NDT/NDI instrument which dynamically alerts an operator when the instrument enters a new inspection zone or leaves the current one and provides at least one of instructions, warnings, and historical data.

It is further an object of the present disclosure to provide a datalogging system for a portable NDT/NDI instrument which dynamically logs the GPS coordinates of flawed or damaged sections of large structures and issues an immediate alert.

It is also an object of the present disclosure to provide a datalogging system for a portable NDT/NDI instrument which stores the GPS coordinates of each inspection readings in a non-editable field.

Other features and advantages of the present invention will become apparent from the following description of the invention that refers to the accompanying drawings.

### BRIEF DESCRIPTION OF THE DRAWINGS

FIG. **1** is a block diagram of a typical portable non-destructive test (NDT) / non-destructive inspection (NDI) instrument using the datalogging system of the present disclosure;
FIG. **2** is a perspective drawing illustrating a typical portable NDT/NDI instrument inspecting a structure using the datalogging system of the present disclosure;
FIG. **3** is a typical graphical inspection report dynamically created by the datalogging system of the present disclosure;
FIG. **4** is a typical datalog file dynamically created by the datalogging system of the present disclosure;
FIG. **5** is a perspective drawing illustrating a typical portable NDT/NDI instrument using an embodiment of the datalogging system of the present disclosure which makes use of an external GPS receiver device.

### DETAILED DESCRIPTION

OEM GPS receivers for portable instruments have been commercially available for several years. The function and use of GPS receivers of this type should be well-known to those skilled in the art. When receiving adequate signals from at least four GPS satellites, a GPS receiver can triangulate its exact position in space within three dimensions with great accuracy. Moreover, as synchronization algorithms and error composition techniques are developed and improved, the resolution of GPS receivers increases, greatly improving the physical displacement changes they are able to detect.

Inertial navigation systems--which make use of accelerometers, gyroscopes, and the like to keep an accurate accounting of an object's displacement over time--have long been coupled with GPS devices to provide continuation of navigational monitoring over periods during which GPS signals are unavailable. The present disclosure describes a datalogging system which includes an embedded GPS receiver, however, the inventors conceive of alternate embodiments that include an inertial navigation system as well as an embedded GPS device. With such an arrangement, the methods described in the present disclosure can be used even in locations with poor GPS reception, e.g. underground, indoors, and near buildings in large urban areas.

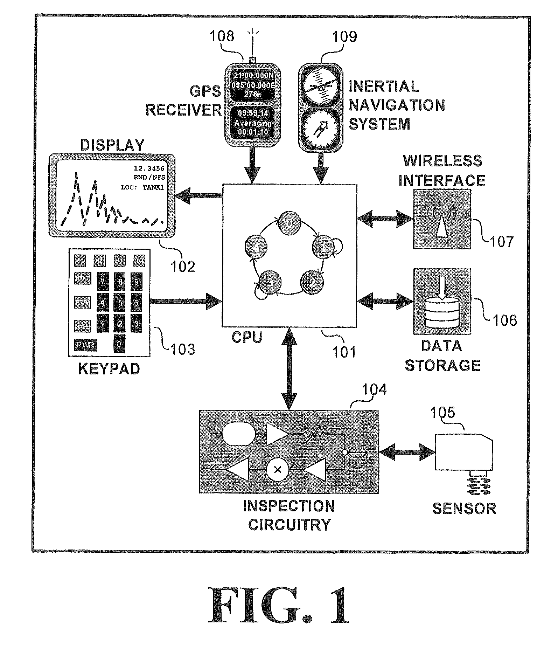

The present disclosure describes a datalogging system with an embedded GPS receiver incorporated into a portable non-destructive test (NDT) / non-destructive inspection (NDI) instrument. FIG. **1** illustrates a typical example of such an NDT/NDI instrument. A central processing unit (CPU) **101** runs a software program which controls and manages the instrument. An operator interfaces with the instrument through the keypad **103** and display **102**. Inspection circuitry **104**, controlled by the CPU **101**, generates impetus signals for and monitors return signals from a sensor **105.** Inspection data is stored in a data storage block **106**--typically a nonvolatile memory device such as a memory card--and can be retrieved by the CPU **101** when needed. A wireless interface **107**--a WI-FI device or a Bluetooth transceiver, for exampleallows the CPU **101** to communicate with an exterior network to send inspection results or receive updates. A GPS receiver **108** continuously updates the CPU **101** with the geographic location of the inspection instrument. For some inspection applications--depending on the geographic resolution required--the GPS receiver **108** will be physically located against the sensor **105**. Finally, an embedded inertial navigation system **109**, comprising of a system of accelerometers and a system of gyroscopes, monitors the displacement of the instrument in three dimensions and reports this data to the CPU **101.** Using this information, the CPU **101** can track the location of the instrument from the last known set of GPS coordinates, greatly expanding the range of the datalogging system of the present disclosure.

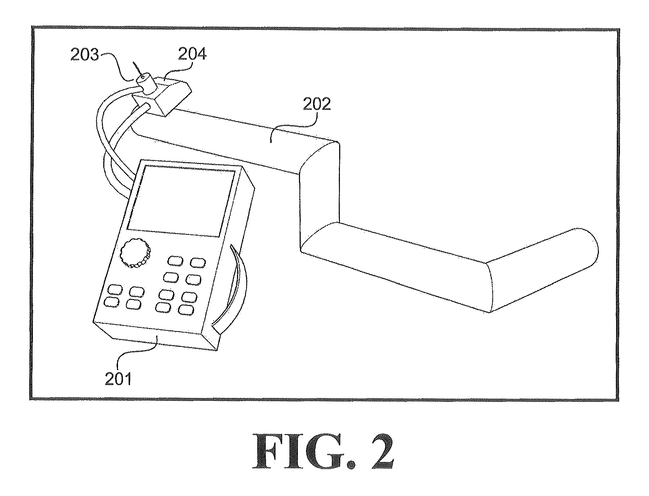

FIG. **2** illustrates a typical portable NDT/NDI instrument **201** using the methods of the present disclosure to inspect a structure **202**. In this case, the GPS receiver module **203** is situated directly atop the instrument sensor **204**, tracking the exact point on the structure **202** each inspection reading is taken.

The present disclosure defines four concepts for a datalogging system with an embedded GPS receiver. The preferred embodiment of the present disclosure describes a datalogging system which comprises all four of these concepts. However, the inventors conceive of a number of alternate embodiments which make use of any subset of these innovations. Each of these concepts is discussed in detail in the following sections:

### 1. Dynamically Record Geographic Stamp and Time Along with Data

For each measurement reading, GPS coordinates detailing the exact location of the inspection sensor and the exact time the reading was observed are recorded along with the inspection data. A data analysis program--either running onboard the inspection instrument or running on a computer which can extract data from the inspection instrument--can make use of this geographic stamp to organize and sort data readings by location regardless of the order in which the measurements were taken.

In the case where the distance between inspection points is greater than the resolution of the embedded GPS receiver, the geographic stamp logged with each measurement can be used to uniquely identify each reading. Further, a graphical representation of the inspection area or structure, drawn to a relative scale and incorporating the analyzed inspection data, can be realized and displayed.

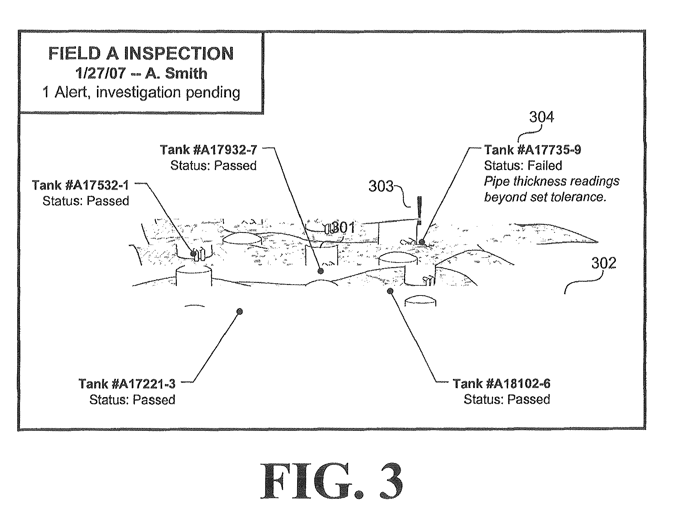

FIG. **3** represents a typical graphical inspection report created using the methods of the present disclosure for such a case. Each inspection point is represented by an icon graphic **301** and placed on a terrain plot of the inspection area **302** according to the GPS coordinates stored during the inspection. In the case of a potential failed inspection, a warning symbol **303** is placed above the inspection point in question. Information about each inspection point--in this case, a resolved location name, brief data analysis, and any warning message--is displayed in text boxes **304** linked to each icon.

In the case where the distance between inspection points is less than the resolution of the embedded GPS receiver, the geographic stamps logged with each measurement can be used to group measurements into predefined zones. Measurements made on "Pipe A" can be easily distinguished from those made on "Pipe B," for example, greatly simplifying data collection and analysis.

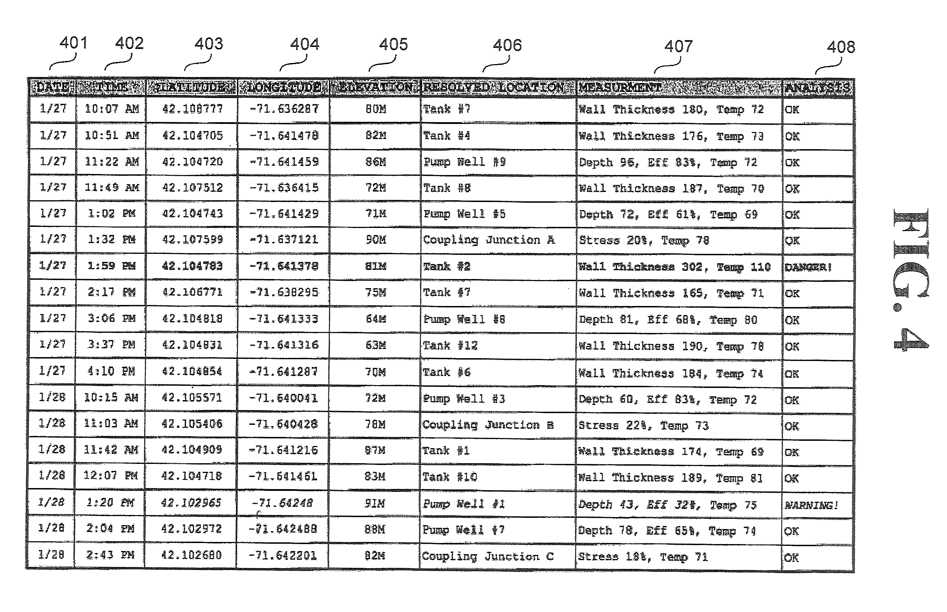

FIG. **4** represents a typical datalog file created by the methods of the present disclosure for such a case. Columns for the date **401** and time **402** for inspection reading are listed on the left. Next are three columns **403, 404, 405** describing the position of the instrument's sensor when the inspection was performed as reported by the embedded GPS device. These raw GPS coordinates are resolved--through the use of a pre-defined lookup table in this example--to a meaningful text string representing the inspection point which is entered into the next column **406**. The final two columns list the actual inspection data **407** and the analysis of that data **408**.

### 2. Provide Operator Instruction at Preset Waypoints

When an inspection field is well defined, the datalogging system of the present invention can be preset to provide operator instruction at specific inspection locations. When the embedded GPS device inside the inspection instrument detects that the instrument has entered a new inspection location, the instrument software will send an alert to operator. This alert can contain a variety of information depending on the needs of the application. Specific measurement instructions, warnings of nearby hazards, or previous inspection results could all be displayed to an operator the moment he steps in range of a new inspection point, improving the accuracy, efficiency, and safety of the inspection process. In a corrosion inspection, for example, previous thickness plots of a structure could be dynamically loaded into the gage at the start of the new inspection and provide an overlay for the new data. This would allow the operator to observe trends in the measurement data during the inspection and greatly improve the quality and value of his inspection efforts.

In addition, with the inspection instrument automatically sensing which inspection location it is in, certain intelligent datalogging features become available. For example, site specific data tables can be loaded and prepared for new data entry without any action from the user or descriptive ID tags can be generated which reflect the GPS coordinates of the location or an alias pre-assigned to said location.

### 3. Mark Structural Defects and Alert Base station

Often in an inspection process, the focus of the inspection is to discern any damaged or flawed pieces of a large structure. Railway inspection, for example, often involves scanning miles of track with an inspection instrument in an effort to discover a crack or some other defect in a rail. Typically an inspection of this type is done in two phases. The first phase is a relatively quick, cursory inspection of the structure. Any readings which do not meet a set of predefined acceptance criteria--usually set with a wide safety tolerance--are flagged for later inspection. The second phase involves a more detailed inspection of each section flagged by the first phase. The methods of the present disclosure are well suited to this task.

Whereas in prior art systems, the marking of suspected flaws in or damaged sections of a structure under test was primarily done by physically marking the structure, an inspection instrument using the methods of the present disclosure can dynamically record the exact geographic location of each of these points. Further, using a wireless networking device or cellular networking technology in concert with the datalogging system of the present invention, alerts can be sent instantly to a monitoring station which can then analyze the information and respond accordingly. Potential danger zones found by the initial inspection can also be logged to prevent any data loss and compared against previous inspection scans to observe any trends in the inspection process.

### 4. Verify Legitimacy of Inspection

In inspection operations where legal or regulatory concerns exist--for example routine maintenance inspections on Alaskan oil pipelines--it can become critical for a test operator or the agency employing said operator to provide evidence that a structure was indeed inspected as reported. The datalogging system of the present invention is well suited to this task.

GPS coordinates obtained from the embedded GPS receiver are stored in a non-editable field within the data record for each measurement. Once an inspection measurement has been made and stored, this information is unalterable, and as such, is resistant to change through erroneous correction or fraudulent data manipulation.

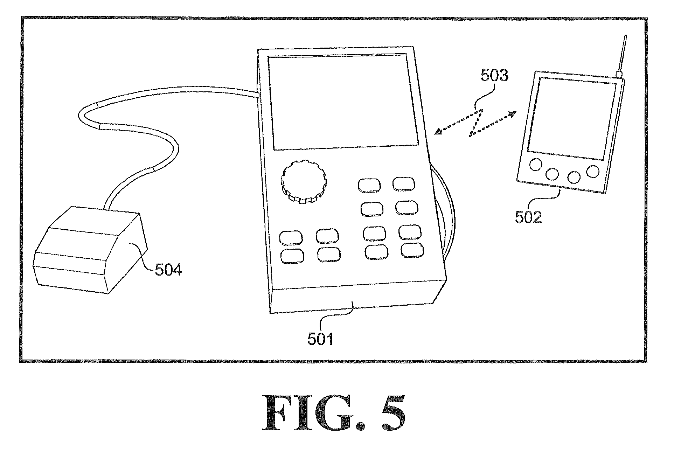

Thus far, the present disclosure has described a datalogging system fitted with an embedded OEM GPS receiver device. However, the inventors conceive of an alternate embodiment of the present invention wherein an external GPS receiver device is used as part of the datalogging system instead. FIG. **5** illustrates this embodiment. The GPS receiver device **502** transmits GPS data to the portable NDT/NDI instrument **501** through a data connection **503**. This data connection **503** can take the form of either a wireless data transfer protocol or a hardwired connection. A datalogging system making use of such an external GPS device retains all of the benefits and novel aspects of the disclosure as described so far, but also potentially allows for a more convenient and lower cost system.

Although the present invention has been described in relation to particular embodiments thereof, many other variations and modifications and other uses will become apparent to those skilled in the art. It is preferred, therefore, that the present invention not be limited by the specific disclosure herein.

## Claims

1. A datalogging system operable with a portable non-destructive test instrument, wherein the instrument is operable to store test data taken along and respectively associated with a plurality of spaced locations along a tested object, the data logging system comprising:
a digital storage medium;
a GPS receiver that provides special location information; and
a data logger which aggregates and associates each element of discrete test data with a corresponding measurement point identified by special location information provided by the GPS receiver.

2. The datalogging system of claim 1, further including an inertial navigation system.

3. The datalogging system of claim 1, in which the spatial location information corresponding to the test data obtained at each measurement point is stored dynamically.

4. The datalogging system of claim 1, wherein the spatial location information of each of said measurement point is stored as a set of GPS coordinates.

5. The datalogging system of claim 1, wherein the spatial location information of each of said measurement point is stored as a text string associated with a range of GPS coordinates.

6. The datalogging system of claim 1, wherein the data logger is operable to store a time stamp obtained from the GPS receiver with the test data.

7. The datalogging system of claim 1, including a facility operable to dynamically detect when an instrument employing said system is in proximity to an inspection location.

8. The datalogging system of claim 7, wherein the datalogging system provides location specific information to an operator upon nearing the inspection location.

9. The datalogging system of claim 7, wherein the datalogging system is operable to provide location specific information to an operator upon leaving the inspection location.

10. The datalogging system of claim 7, wherein the datalogging system is operable to provide a location specific data file for new data entry upon nearing the inspection location.

11. The datalogging system of claim 7, wherein the datalogging system is operable to recall location specific historical data upon nearing the inspection location.

12. The datalogging system of claim 11, wherein the historical data is recalled from a remote data storage device via a wireless network connection.

13. The datalogging system of claim 1, when the system is operable to dynamically record the spatial location of measurements deemed to be critical pursuant to pre-defined criticality criterion.

14. The datalogging system of claim 13, including a facility operable to transmit the data record of the critical measurement via a wireless network interface.

15. The datalogging system of claim 1, including a facility operable to use the spatial location reported by the GPS receiver to reconstruct a geometrical model of a structure under test.

16. The datalogging system of claim 1, including a facility that stores the spatial location information in a read only format.

17. The datalogging system of claim 16, including a facility that is operable to encrypt the spatial location information.
